(19) Europäisches Patentamt
European Patent Office
Office européen des brevets

(11) **EP 2 161 845 A1**

(12) **EUROPEAN PATENT APPLICATION**
published in accordance with Art. 153(4) EPC

(43) Date of publication:
**10.03.2010 Bulletin 2010/10**

(51) Int Cl.:
***H04B 1/707*** *(2006.01)*

(21) Application number: **07764243.7**

(22) Date of filing: **18.07.2007**

(86) International application number:
**PCT/CN2007/070316**

(87) International publication number:
**WO 2008/148277 (11.12.2008 Gazette 2008/50)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **06.06.2007 CN 200710110569**

(71) Applicant: **Masshall Limited**
**Romasco Place**
**Wickhams Cay 1**
**P.O. Box 3140**
**Road Town, Tortola (VG)**

(72) Inventors:
- **LI, Chao**
  **Beijing 100085 (CN)**
- **XU, Chaolun**
  **Beijing 100085 (CN)**
- **GAO, Kangqiang**
  **Beijing 100085 (CN)**

(74) Representative: **Le Forestier, Eric et al**
**Cabinet Régimbeau**
**20, rue de Chazelles**
**75847 Paris Cedex 17 (FR)**

(54) **A MULTIPATH TRACKING DEVICE AND METHOD IN A CDMA COMMUNICATION SYSTEM**

(57) A multipath tracking device and method in CDMA communication systems add a middle path power estimation unit, a normalization processing unit and a nonlinear mapping unit in an existing multipath tracking device. A precise current middle path signal power is acquired by the middle-path power estimation unit, the normalization processing is performed for the power errors of the late and early path signals in the normalization processing unit, and thus the impact of the middle path signal power on the power error is eliminated, the active normalization for the power error is realized; after obtaining the smooth and stable normalized power error signal, the precise delay error signal is determined in the nonlinear mapping unit according to the nonlinear mapping relation between the normalized power error signal and the delay error signal, thereby the precise voltage control is acquired.

Fig. 3

**Description**

TECHNICAL FIELD

The present invention relates to multipath tracking technology, especially to a multipath tracking device and method in Code Division Multiple Access (CDMA) communication systems.

BACKGROUND

With the advantages of large capacity, multi-user, soft capacity, and inhibiting system in-band noise, CDMA technology has the obvious advantage in comparison with traditional Frequency Division Multiple Access (FDMA) and Time Division Multiple Access (TDMA). Just because of this, 3G wireless communication system based on CDMA technology has become the rapidly developing mainstream commercial wireless communication system at present.

In a CDMA wireless communication system, when signals are transmitted in the air, on the one hand they are affected by blocking, reflection, refraction and diffusion of obstacles, and the ionosphere, and so forth; on the other hand, offset and expansion in the frequency domain may also occur while the signals with limited bandwidth are transmitted in the air. Therefore, the signals that a RAKE receiver receives are no longer direct single-path signals. Instead, they are multipath signals coming from different directions and through different paths. The initial data that are transmitted in multipath signals are all the same, but multipath signals have different time delays and are superposition of the copies of the independent sent signals. The signals that have the same data source but come from different paths are usually referred to as multipath signals. Since data symbol is extended by long Pseudo-Noise (PN) sequence, the duration of each chip is very short. Thus, signals that are transmitted to the RAKE receiver through different paths can be effectively separated on the chip.

In a wireless communication system, accurate time synchronization is very important, and synchronization or not and the operational accuracy that synchronization achieves can directly affect whether a wireless communication system work normally and the operating performance of the wireless communication system. In the wireless communication system that adopts CDMA technology, namely in a CDMA wireless communication system, time synchronization appears to be particularly important, the accuracy requirement for time synchronization is often lower than one chip length of time, such as 1/16 chip. The reason that CDMA wireless communication systems have such a strict requirement on time synchronization is that CDMA wireless communication systems differentiate cells through different scrambling codes, and differentiate users through different spreading codes. When the synchronization accuracy of CDMA wireless communication system fails to meet the requirement, the Multiple Access Interference (MAI), Inter-symbol Interference (ISI) and Multipath Interferences (MPI) that users get will increase sharply. For multi-cell and multi-user, inaccurate synchronization would greatly affect the service quality of CDMA wireless communication system, and even make the CDMA wireless communication system work abnormally in severe cases.

Thus, it appears to be extremely important for a CDMA wireless communication system to capture and lock signals on each receiving branch accurately in terms of time. Currently, capturing signals of each path is usually achieved through multipath search, and the multipath search captures the multipath position of the received signals, with an accuracy which is no lower than 1/2 chip. However, in practice, on the one hand, the position of multipath signal usually offsets within a certain range because of various reasons; on the other hand, for the RAKE receiver, the accuracy of the captured position of multipath is not high enough. For the sake of capturing the positions of multipath more accurately and locking each position of multipath within the designed accuracy range, usually the method of multipath tracking is applied. The plan which is used a lot by multipath tracking is based on the multipath tracking circuit of the Delay-Locked Loop (DLL) of early-late threshold. The so-called early-late threshold is to distinguish signals between early-path signals and late-path signals. The signal of which delay has $\Delta$ chips earlier than the correct delay is called early-path signal, and the signal of which delay has $\Delta$ chips later than the correct delay is called late-path signal.

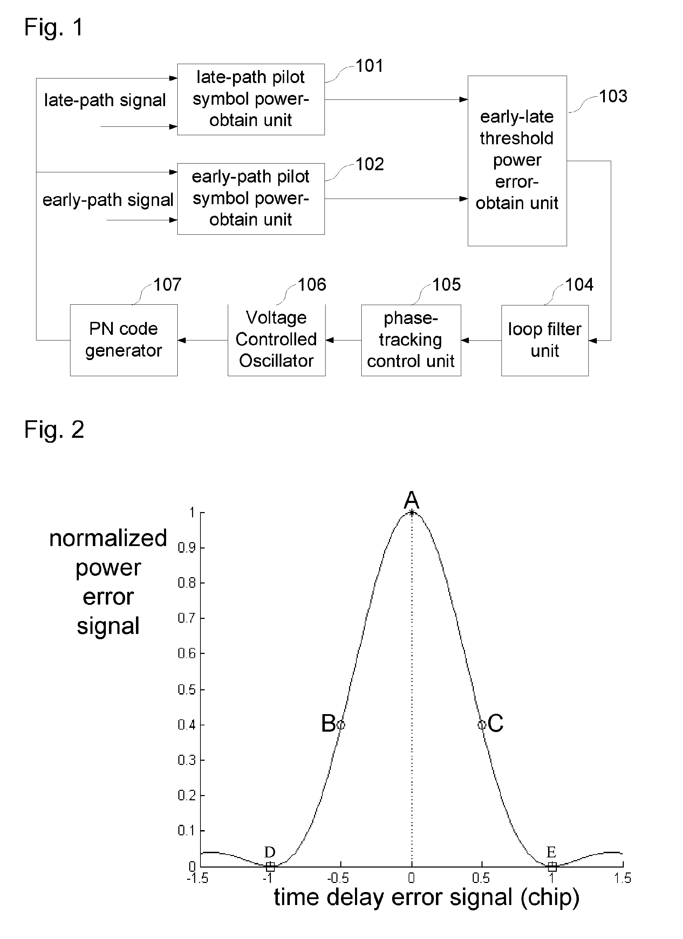

Fig.1 is a schematic diagram illustrating a structure of the existing multipath tracking device. As shown in Fig. 1, the multipath tracking device comprises a late-path pilot symbol power-obtain unit 101, an early-path pilot symbol power-obtain unit 102, an early-late threshold power error-obtain unit 103, a loop filter unit 104, a phase-tracking control unit 105, a Voltage Controlled Oscillator (VCO) 106 and a PN code generator 107. Wherein, the late-path pilot symbol power-obtain unit 101 is applied to generate a late-path signal power according to the received late-path signal and PN codes come from the PN code generator 107, and output the late-path signal power to the early-late threshold power error-obtain unit 103; the early-path pilot symbol power-obtain unit 102 is applied to generate an early-path signal power according to the received early-path signal and PN codes come from the PN code generator 107, and output the early-path signal power to the early-late threshold power error-obtain unit 103, both the late-path signal and the early-path signal are complex signals with I-path and Q-path altogether; the early-late threshold power error-obtain unit 103 is applied to calculate the power error of the late-path signal and the early-path signal according to the received late-path signal power and early-path signal power, convert the power error to time delay error, and output the time delay error to the loop filter unit 104; the loop filter unit 104 is applied to filter out the interference of the received time delay error and loop noise, obtain smoother, more stable early and late-path time delay error signal, and output the time delay error signal to the phase-tracking control unit 105; the phase-tracking control unit 105 is applied to convert the received time delay error signal to voltage control signal that corresponds to the voltage controlled oscillator 106 according to the response property of the voltage controlled oscillator 106, and output the voltage control signal to the voltage controlled oscillator 106; the voltage controlled oscillator 106 is applied to control the PN code generator 107 to generate PN codes according to the received voltage control signal; the PN code generator 107 generates PN codes under the adjustment of the control voltage of the voltage control oscillator, output PN codes respectively to the late-path pilot symbol power-obtain unit 101 and the early-path pilot symbol power-obtain unit 102, and lock multipath position by adjusting and locking the phase of PN codes.

The expression form of the power error $e_i(\varepsilon)$ of late and early-path signal that is obtained through the early-late threshold power error-obtain unit 103 is: $e_i(\varepsilon)=K \cdot P_i \cdot [g^2((\varepsilon-0.5)T_c)-g^2((\varepsilon+0.5)T_c)]$, wherein, K is a constant, $P_i$ is the complex power of the current middle-path despreading symbol, namely the complex power after the current middle-path signal despreading, $\varepsilon$ is the time delay signal of the loop after normalizing the chip, function $g(\varepsilon T_c)$ is normalized unit shock response after the receiver matching the filter. The receiving filter is a filter located in the front of the RAKE receiver that receives signal firstly, and a root raised cosine filter, such as the 3rd Generation Partnership Project (3GPP) system, is used commonly, when the receiver matched filter, shock response of the receiving filter is a raised cosine filter. Here the expression form of $g(\varepsilon T_c)$ is: $g(\varepsilon T_c) = \dfrac{\sin(\pi\varepsilon)}{\pi\varepsilon} \cdot \dfrac{\cos(\pi\varepsilon)}{1-(2\alpha\varepsilon)^2}$ , wherein, $\alpha$ is a roll-off factor of the receiving filter, such as 0.22 in 3GPP FDD.

According to the expression form of $e_i(\varepsilon)$, $e_i(\varepsilon)$ contains $P_i$, and thus, the time delay error signal obtained through $e_i(\varepsilon)$ also contains an effect of $P_i$, this may lead to a lot of problems. Firstly, $P_i$ is the power value of the pilot symbol that is descrambled and despreaded when the sending signals that are interfered and attenuated in the channel reach the RAKE receiver. $P_i$ may fluctuate greatly because of the mobility of terminals, time-varying of wireless channels and non-ideality of the power control, and the fluctuation range is from 2 to 4 orders of magnitude. Therefore, this definitely lead to tremendous fluctuations of obtained $e_i(\varepsilon)$, if the process of $e_i(\varepsilon)$ has not been undertaken accordingly to eliminate the effect of $P_i$, and thus, the accurate synchronization and tracking of multipath signals cannot be achieved according to $e_i(\varepsilon)$.

INVENTION CONTENT

In view of this, the present invention mainly aims to provide a multipath tracking device and method in code division multiple access communication systems, to synchronize and track signals of various paths accurately.

To achieve the above-mentioned aim, the technical scheme of the present invention is implemented as follows:

The present invention provides a multipath tracking device in code division multiple access communication system, comprising: a late-path pilot symbol power-obtain unit, an early-path pilot symbol power-obtain unit, a middle-path pilot symbol power-obtain unit, an early-late threshold power error-obtain unit, a middle-path power estimation unit, a normalizing-treat unit, a loop filter unit, a non-linear mapping unit, a phase-tracking control unit, a voltage controlled oscillator and a pseudorandom PN code generator, wherein, said late-path pilot symbol power-obtain unit is applied to generate a late-path signal power according to received late-path signals and PN codes that come from the PN code generator, said early-path pilot symbol power-obtain unit is applied to generate an early-path signal power according to received early-path signals and PN codes that come from PN code generator, said middle-path pilot symbol power-obtain unit is applied to generate a middle-path signal power according to received middle-path signals and PN codes that come from PN code generator; said early-late threshold power error-obtain unit is applied to calculate a power error of the late, early-path signal according to said late-path signal power and said early-path signal power; said middle-path power estimation unit is applied to determine an accurate current middle-path signal power according to said middle-path signal power; said normalizing-treat unit is applied to normalize said power error according to said accurate current middle-path signal power, and obtain a normalized power error; said loop filter unit is applied to filter out the interference of said normalized power error and loop noise, and obtain a smooth and stable normalized power error signal; said non-linear mapping unit is applied to determine the time delay error signal that corresponds to said normalized power error signal according to the corresponding relation between the stored normalized power error signal and the time delay error signal; said phase-tracking control unit is applied to convert the received time delay error signal to voltage control signal that corresponds to said voltage controlled oscillator according to the response property of said voltage controlled oscillator; said voltage controlled oscillator is applied to control the PN code generator to generate PN codes according to said voltage control signal; said PN code generator generates PN codes under the adjustment of the control voltage of the voltage control oscillator, and output PN codes respectively to the late-path pilot symbol power-obtain unit, the early-path pilot symbol power-obtain unit and the middle-path pilot symbol power-obtain unit.

In a better way, said middle-path power estimation unit is further applied to receive said late-path signal power and said early-path signal power, and determine accurate current middle-path signal power according to said late, early, and middle-path signal power.

In a better way, said normalizing-treat unit is further applied to make N-point moving weighted average to said middle-path signal power.

The present invention provides a multipath tracking method in code division multiple access communication systems, comprising: determining the power errors of late and early-path signals according to PN codes, late, and early-path signals, and obtaining the accurate current middle-path signal power; normalizing said power error according to said current middle-path signal power, obtaining normalized power error signal, according to a non-linear mapping relation between the normalized power error signal and the time delay error signal, and determining the time delay error signal that corresponds to the received normalized power error signal; converting the time delay error signal to a voltage control signal that is used to control PN code-generating, and locking multipath position through adjusting and locking the phase of PN codes.

Accordingly, said obtaining accurate current middle-path signal power, comprising: the current middle-path signal power is treated as accurate current middle-path signal power; or, the accurate current middle-path signal power is determined according to the respective power of late, early, and middle-path signal.

Accordingly, said determining the accurate current middle-path signal power according to the respective power of the late, early, and middle-path signal, comprising: $S_i = (P_{i,E} + P_{i,L} + P_{i,O})/(1+2g^2(0.5T_c))$, wherein, $S_i$ is the accurate current middle-path signal power, $P_{i,E}$ is the early-path signal power, $P_{i,L}$ is the late-path signal power, $P_{i,O}$ is the middle-path signal power, and $1+2g^2(0.5T_c)$ is a set value; or, $S_i = (P_{i,E}+P_{i,L}+P_{i,O}-Min(P_{i,E},P_{i,L},P_{i,O}))/(1+g^2(0.5T_c))$, wherein, $S_i$ is the accurate current middle-path signal power, $P_{i,E}$ is the early-path signal power, $P_{i,L}$ is the late-path signal power, $P_{i,O}$ is the middle-path signal power, $1+g^2(0.5T_c)$ is a set value.

Accordingly, said non-linear mapping relation between the normalized power error signal and the time delay error signal, is: $\overline{\eta}_i(\varepsilon)=g^2((\varepsilon-0.5)T_c)-g^2((\varepsilon+0.5)T_c)$, wherein, $\overline{\eta}_i(\varepsilon)$ is the normalized power error signal, and $\varepsilon$ is the time delay error signal and $-0.5T_c \le \varepsilon \le 0.5T_c$, and $\varepsilon$ is the value that corresponds to $\overline{\eta}_i(\varepsilon)$.

Accordingly, before said normalizing treatment, further comprising: making N-point moving weighted average

$$\hat{P}_i = \sum_{k=1}^{N} w_k \cdot s_{i-k}$$ to the middle-path signal power, wherein, $\hat{P}_i$ is the weighted average power of the middle-path signal,

and $s_{i-k}$ is the estimated $k$ th middle-path signal power before the current symbol $S_i$, and $w_k$ is a filter coefficient, and

$$\sum_{k=1}^{N} w_k = 1 .$$

Accordingly, said filter coefficient adopts: a weighted average filter; or, a polynomial-weighted filter; or, an index-weighted filter.

In the present invention, the middle-path power estimation unit, the normalizing-treat unit and the non-linear mapping unit are added on the base of the existing technology. The accurate current middle-path signal power is obtained through the middle-path power estimation unit, and the power error of the early-late channel signal is normalized in the normalizing-treat unit, and the effect of middle-path signal power on power error is eliminated, and the effective normalizing to power error is achieved; after obtaining the smooth and stable normalized power error signal, according to the non-linear mapping relation between the normalized power error signal and the time delay error signal, the accurate time delay error signal is determined in the non-linear mapping unit. Thus, the voltage control signal that is obtained from the time delay error signal is more accurate, moreover, PN codes that are generated under the control of the voltage control signal then could lock multipath position accurately, the accuracy of multipath tracking is increased effectively, and the timing jitter is reduced.

Moreover, the normalizing-treat unit makes N-point moving weighted average to the middle-path signal power, and obtains more accurate middle-path signal power.

BRIEF DESCRIPTION OF THE DRAWINGS

Fig. 1 is a schematic diagram illustrating the structure of the existing multipath tracking device;
Fig. 2 is a schematic diagram illustrating unit pulse response power of the raised cosine filter;
Fig. 3 is a schematic diagram illustrating the structure of the multipath tracking device in the present invention;
Fig. 4A is a schematic diagram illustrating the phase-identification characteristics of the power error signal and the time delay error signal that is adopted in the existing technology;

Fig. 4B is a schematic diagram illustrating the phase-identification characteristics of the normalized power error signal and the time delay error signal that is adopted in the present invention;

Fig. 5 is a schematic diagram illustrating the specific structure of the multipath tracking device according to the present invention;

Fig. 6 is a schematic diagram illustrating the comparison of the mapping-relation between the power error signal and the time delay error signal in the present invention and the existing technology.

DETAILED DESCRIPTION

Because the power error signal $e_i(\varepsilon)$ of the late-early path signal contains the current middle-path signal power $P_i$, $P_i$ needs to be estimated accurately, and the estimated $P_i$ is eliminated from $e_i(\varepsilon)$, the normalized power error signal is obtained, so that synchronize and track are processed accurately according to the normalized power error signal in the follow-up process.

$P_i$ is the power that is the current despreaded middle-path signal, and in order to eliminate the affection of $P_i$ to obtain the normalized power error signal, then $P_i$ needs to be estimated accurately, Fig. 2 is a schematic diagram illustrating unit pulse response power of the raised cosine filter, as shown in Fig. 2, the response of the receiving filter is raised cosine filter, whose unit pulse response power is expressed as $g^2(\varepsilon T_c)$. If the captured multipath position is entirely accurate, then $P_i$ corresponds to point A in the figure, but if the captured multipath position has the time delay error, for example, the time delay error is [-1/2,1/2] chip, then $P_i$ corresponds to the region from point B to point C in the figure, here, the estimate of $P_i$ is not accurate, so, how to estimate $P_i$ accurately is very important.

In the present invention, the power errors of the late and early-path signals are determined according to the PN codes, late, and early-path signals, and the accurate current middle-path signal power is obtained, the power errors of late and early-path signals are normalized according to the obtained current middle-path signal power, and the normalized power error signal is obtained, and according to the non-linear mapping-relation between the normalized power error signal and the time delay error signal, the time delay error signal that is corresponding to the obtained normalized power error signal is determined, the time delay error signal is converted to voltage control signal that is used to control PN code-generating, the multipath position is locked through adjusting and locking the phase of PN codes.

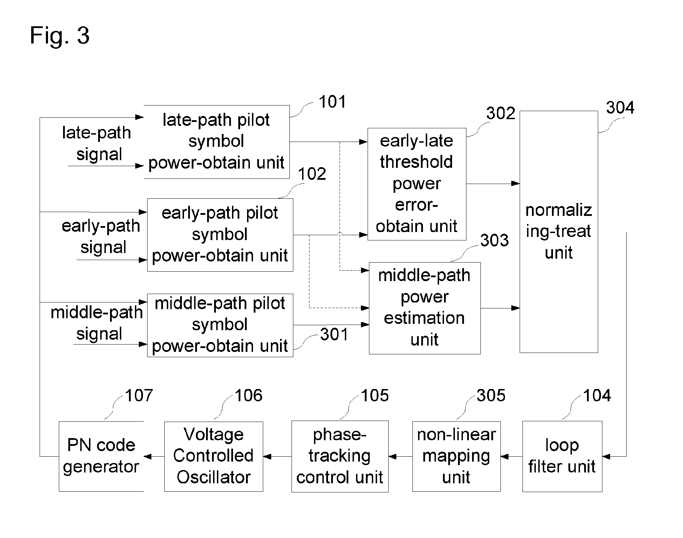

Fig. 3 is a schematic diagram illustrating the structure of the multipath tracking device in the present invention, as shown in Fig. 3, the multipath tracking device comprises a late-path pilot symbol power-obtain unit 101, an early-path pilot symbol power-obtain unit 102, a middle-path pilot symbol power-obtain unit 301, an early-late threshold power error-obtain unit 302, a middle-path power estimation unit 303, a normalizing-treat unit 304, a loop filter unit 104, a non-linear mapping unit 305, a phase-tracking control unit 105, a voltage controlled oscillator 106 and a PN code generator 107, compared to the existing multipath tracking device, the middle-path pilot symbol power-obtain unit 301 which is used to receive the middle-path signal, the middle-path power estimation unit 303, the normalizing-treat unit 304 and the non-linear mapping unit 305 are added. Moreover, the role of the early-late threshold power error-obtain unit 302 is also different from the existing early-late threshold power error-obtain unit 103. Because the role of each unit included in the existing multipath tracking device is described in details in the background part, the differences between said each unit and the existing ones in achievement and connect relation and the detailed achievement of each new-added unit are only described here.

The middle-path pilot symbol power-obtain unit 301 is applied to generate a middle-path signal power according to the received middle-path signal and PN codes which come from PN code generator 107, and output the middle-path signal power to the middle-path power estimation unit 303; the middle-path power estimation unit 303 is applied to determine the accurate current middle-path signal power according to the received middle-path signal power, and output the accurate current middle-path signal power to the normalizing-treat unit 304. Here, for the CDMA wireless communication systems, the signal power of each path is usually the despreaded symbol power in the continuous pilot channel, such as the symbol power which is despreaded in the Common Pilot Channel (CPICH) in Wide-band Code Division Multiple Access (WCDMA) systems. The detailed achievement of the middle-path power estimation unit 303 could have two different ways that are shown as follow, in one way of the achievement, the middle-path power estimation unit 303 only receives the current middle-path signal power that is output by the middle-path pilot symbol power-obtain unit 301, here, the middle-path power estimation unit 303 treats the middle-path signal power directly as the accurate current middle-path signal power; in another way of achievement, the middle-path power estimation unit 303 not only receives the current middle-path signal power that is output by the middle-path pilot symbol power-obtain unit 301, but also receives the respective power of the late and early-path signal that are output from the late-path pilot symbol power-obtain unit 101, and the early-path pilot symbol power-obtain unit 102, here, the middle-path power estimation unit 303 determines the accurate current middle-path signal power according to the respective power of the late, early, and middle-path signals. To make current middle-path signal power more accurate, after receiving the accurate current middle-path signal power provided by the middle-path power estimation unit 303, the normalizing-treat unit 304 could make further smoothing process to the middle-path signal power, namely make N-point moving weighted average to middle-path signal power.

The early-late threshold power error-obtain unit 302 is applied to calculate the power errors of the late and early-path signals according to the received late-path signal power and the early-path signal power, and output the power error to the normalizing-treat unit 304. The normalizing-treat unit 304 is applied to normalize the power error according to the accurate current middle-path signal power, and output the obtained normalized power error to loop filter unit 104. The loop filter unit 104 is applied to filter the interference of the received normalized power error and loop noise, get smoother, more stable normalized power error signal, and output the normalized power error signal to the non-linear mapping unit 305. The non-linear mapping unit 305 is applied to determine the time delay error signal that is corresponding to the received normalized power error signal according to the corresponding relation between the stored normalized power error signal and the time delay error signal, and output the time delay error signal to the phase-tracking control unit 105. The respective role of the phase-tracking control unit 105, the voltage controlled oscillator 106 and the PN code generator 107 is the same as the existing technology.

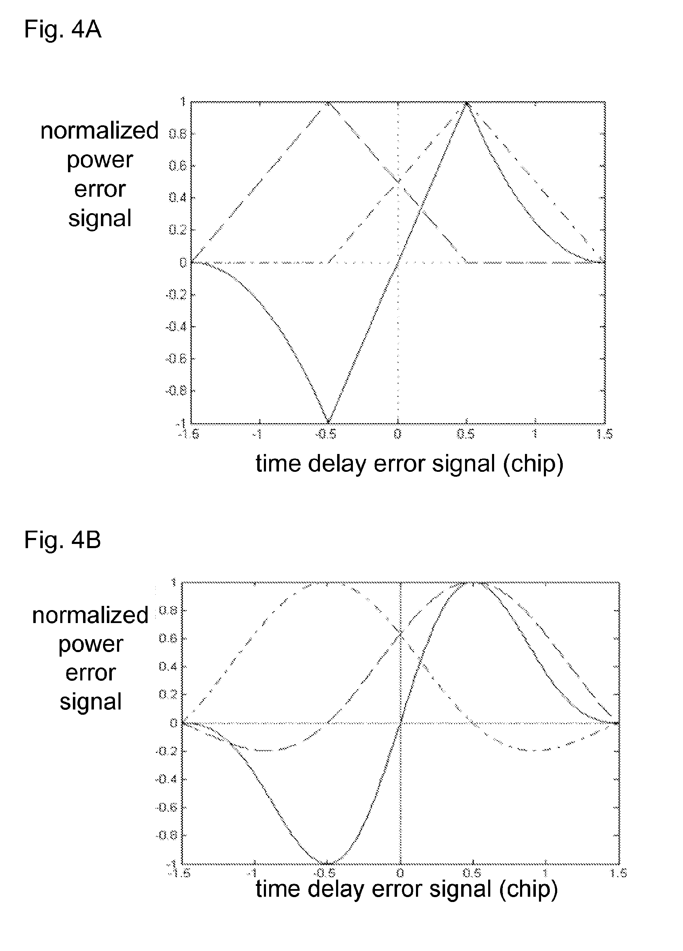

The power error of the late-path signals and early-path signals is $e_i(\varepsilon) = K \cdot P_i \cdot [g^2((\varepsilon-0.5)T_c)-g^2((\varepsilon+0.5)T_c)]$, thus, after getting the accurate current middle-path signal power $P_i$, the normalizing-treat unit 304 can obtain the normalized power error i.e., $\eta_i(\varepsilon)=e_i(\varepsilon)/(K \cdot P_i)=g^2((\varepsilon-0.5)T_c)-g^2((\varepsilon+0.5)T_c)$, the normalized power error signal that is processed by the loop filter is $\overline{\eta}_i(\varepsilon)=g^2((\varepsilon-0.5)T_c)-g^2((\varepsilon+0.5)T_c)$. It could be known from the expression of $\overline{\eta}_i(\varepsilon)$ that the phase-identification characteristic between $\overline{\eta}_i(\varepsilon)$ and the time delay error signal $\varepsilon$ is not the simple linearity relation that is adopted in existing technology, shown in Fig. 4A, but is the non-linear relation as shown in Fig. 4B. Thus, the corresponding value relation between $\overline{\eta}_i(\varepsilon)$ and $\varepsilon$ needs to be determined according to the expressions of $\overline{\eta}_i(\varepsilon)$ and $\varepsilon$. The non-linear mapping unit 305 determines the $\varepsilon$ through $\overline{\eta}_i(\varepsilon)$ according to the corresponding relation, and $-0.5T_c \leq \varepsilon \leq 0.5T_c$. The roll-off factor $\alpha$ has different values, so the corresponding relation between $\overline{\eta}_i(\varepsilon)$ and $\varepsilon$ would be different, but as long as $\alpha$ is determined, the corresponding relation between $\overline{\eta}_i(\varepsilon)$ and $\varepsilon$ would also be determined.

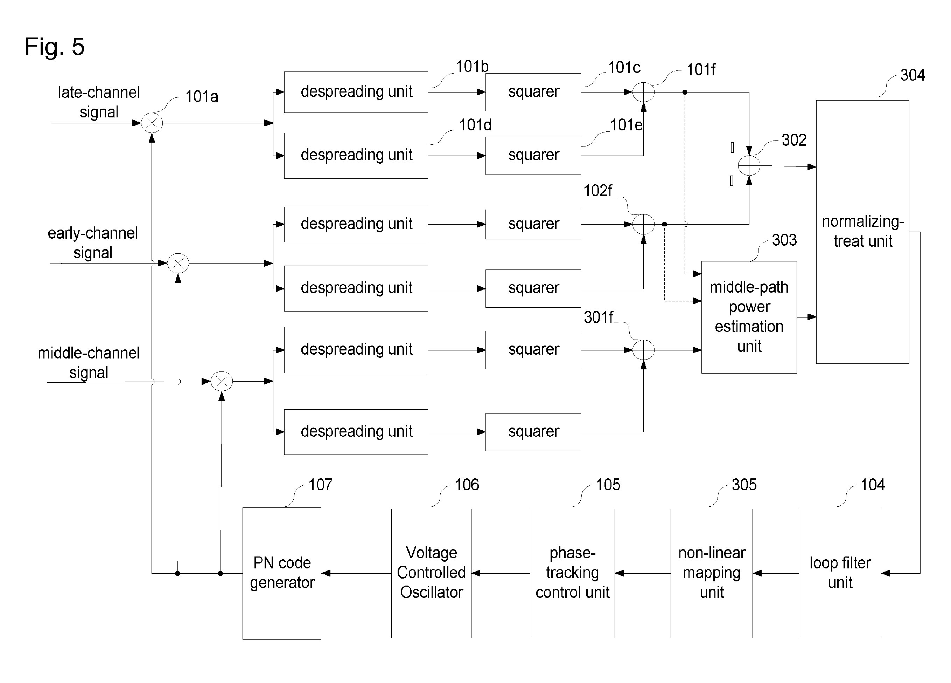

Fig. 5 is a schematic diagram illustrating the specific structure of the multipath tracking device according to the present invention, as shown in Fig. 5, the late-path pilot symbol power-obtain unit 101, the early-path pilot symbol power-obtain unit 102, and the middle-path pilot symbol power-obtain unit 301 respectively comprises a multiplier, two despreading units, two squarers and an adder. The following only takes the late-path pilot symbol power-obtain unit 101 which receives the late-path signal as an example, to describe the specific role of each contained unit. Multiplier 101 a is applied to multiply the received late-path signals and PN codes which come from PN code generator 107, and separate the complex signal of I-path and Q-path that is got by multiplying into I-path signal and Q-path signal, which is output to the despreading unit 101b, 101d respectively; the despreading unit despreads the received signals, and outputs the despreading signals to the squarers; the despreading unit 101b outputs the despreading signals to squarer 101c; the despreading unit 101d outputs despreading signals to the squarer 101e; the squarer 101c and 101e square the received despreading signals, and then output the signals to the adder 101f; the adder 101f sums the received signals, and outputs the summed signal to the early-late threshold power error-obtain unit 302, the summed signal is a late-path signal power. The early-late threshold power error-obtain unit 302 could be achieved by a subtractor, namely subtract the output result of the adder 102f from the output result of the adder 101f, and the difference after subtraction would be sent to the normalizing-treat unit 304 by the subtractor 302. If the outputs of the adder 101f and the adder 102f are not sent to the middle-path power estimation unit 303, then the output of adder 301f could be sent to the middle-path power estimation unit 303 as the accurate current middle-path signal power; if the outputs of the adder 101 f, the adder 102f and the adder 301f are sent to the middle-path power estimation unit 303, then the middle-path power estimation unit 303 determines the accurate current middle-path signal power according to the respective power of the late, early, and middle-path signal.

The specific treatment that determines the accurate current middle-path signal power according to the respective power of the late, early, and middle-path signal could be: the ratio of the sum of the early, late, and middle-path signal power to the set value is taken as the accurate current middle-path signal power, which could be expressed specifically as $S_i = (P_{i,E}+P_{i,L}+P_{i,O})/(1+2g^2(0.5T_c))$, wherein, $S_i$ is the accurate current middle-path signal power, $P_{i,E}$ is the early-path signal power, $P_{i,L}$ is the late-path signal power, $P_{i,O}$ is the middle-path signal power, $1+2g^2(0.5T_c)$ is the set value.

The specific treatment that determines the accurate current middle-path signal power according to the respective power of the late, early, and middle-path signal could also be: subtracting the minimum value of the power among three paths of the early, late, and middle-path signal from the sum of power of three paths of the early, late, and middle-path signals to get a value, and then taking the ratio of the value with the set value as the accurate current middle-path signal power, could be expressed specifically as: $S_i = (P_{i,E}+P_{i,L}+P_{i,O}-Min(P_{i,E},P_{i,L},P_{i,O}))/(1+g^2(0.5T_c))$. Combining with Fig. 2, if multipath tracking has no error, then the middle-path signal locates in point A of the figure, the early-path signal locates in point B of the figure, the late-path signal locates in point C of the figure, and $P_{i,E} + P_{i,L} + P_{i,O} - Min(P_{i,E},P_{i,E},P_{i,O})$ is the sum of the power of point A and the power of the bigger one between point B and C, and then the sum is normalized by $1+g^2(0.5T_c)$ to get the accurate current middle-path signal power. If multipath searching is inaccurate, such as, the middle-path signal corresponds point C in the figure, and then accordingly the early-path signal would correspond point A in the figure, and the late-path signal would correspond point E in the figure, and then the accurate current middle-path signal power is obtained according to $P_{i,E}+P_{i,L}+P_{i,O}-Min(P_{i,E},P_{i,L},P_{i,O})$, and the accurate current middle-path signal power is still the sum of the power of point A and the power of point C, and then the sum is normalized by $1+g^2(0.5T_c)$ to obtain the result which is the same as the result which is obtained when multipath tracking has no error.

After receiving the accurate current middle-path signal power that is provided by the middle-path power estimation unit 303, the normalizing-treat unit 304 could make further treatment of smooth to the middle-path signal power, namely make N-point moving weighted average to the middle-path signal power, namely $\hat{P}_i = \sum_{k=1}^{N} w_k \cdot s_{i-k}$ , and each middle-path signal power that is obtained previously $N$-1 times and the current middle-path signal power value $S_i$ is

processed by weighted filtering, wherein, $\hat{P}_i$ is the weighted average power of the middle-path signal; $w_k$ is the filter

coefficient, which needs to meet the condition that is $\sum_{k=1}^{N} w_k = 1$ , and $k$ is the $k$ th item weighted coefficient; $s_{i-k}$ is the

estimated the $k$ th middle-path signal in front of the current symbol $S_i$. $w_k$ could adopt weighted average filtering, namely $w_k = 1/N$ ; $w_k$ could also adopt polynomial-weighted filtering, namely $w_k=a_0 \cdot k^p+a_1 \cdot k^{p-1}+\cdots+a_{p-1}$, wherein, $p$ is the order of polynomial; $w_k$ could also adopt index-weighted filtering, namely $w_k = b_0.a^{-b1 \cdot k}$, wherein, $a$, $b_0$ and $b_1$ are set constants.

For the non-linear mapping embodiment that is between normalized power error signal $\overline{\eta}_i(\varepsilon)$ and time delay error signal $\varepsilon$ in the present invention, we make further description with the following example. If the roll-off factor $\alpha$ of the receiving filter is 0.22, and the tracking accuracy of the multipath tracking device is designed as 1/16chip, then the corresponding relation between $\overline{\eta}_i$ and $\varepsilon$ is shown as table 1:

Table 1 The mapping demonstration table between $\overline{\eta}_i(\varepsilon)$ and $\varepsilon$

| $\overline{\eta}_i$ | 0 | 0.2011 | 0.3935 | 0.5690 | 0.7204 | 0.8421 | 0.9302 | 0.9828 | ≥1 |
|---|---|---|---|---|---|---|---|---|---|
| $\varepsilon$ | 0 | 1/16 | 2/16 | 3/16 | 4/16 | 5/16 | 6/16 | 7/16 | 8/16 |

In the non-linear mapping unit 305, the non-linear mapping unit 305 compares the received $\overline{\eta}_i(\varepsilon)$ with $\overline{\eta}_i$ in the corresponding relation table, takes the $\overline{\eta}_i$ that is closest to $\overline{\eta}_i(\varepsilon)$ as $\overline{\eta}_i(\varepsilon)$, and takes the $\varepsilon$ that is corresponding to the $\overline{\eta}_i$ as the time delay error signal that is to get finally. For example, $\overline{\eta}_i(\varepsilon)$ that is received by non-linear mapping unit 305 is 0.61, and the value of $\overline{\eta}_i$ that is the closest to 0.61 is 0.5690 in the corresponding relation table, therefore, 3/16 that is corresponding to 0.5690 is taken as the value of $\varepsilon$; for example, $\overline{\eta}_i(\varepsilon)$ that is received by the non-linear mapping unit 305 is -0.84, and the value of $\overline{\eta}_i$ that is the closest to 0.84 is 0.8421 in the corresponding relation table, and the $\varepsilon$ that is corresponding to 0.8421 is valued as 5/16. Because $\overline{\eta}_i(\varepsilon)$ is -0.84, the value of $\varepsilon$ is determined as -5/16 finally. Here, only a simple example on specific achievement is made to the present invention, when the adopted filter or the tracking accuracy is different, the value of each part in the corresponding relation table would also be different correspondingly, but the achievement processes are the same as the above description.

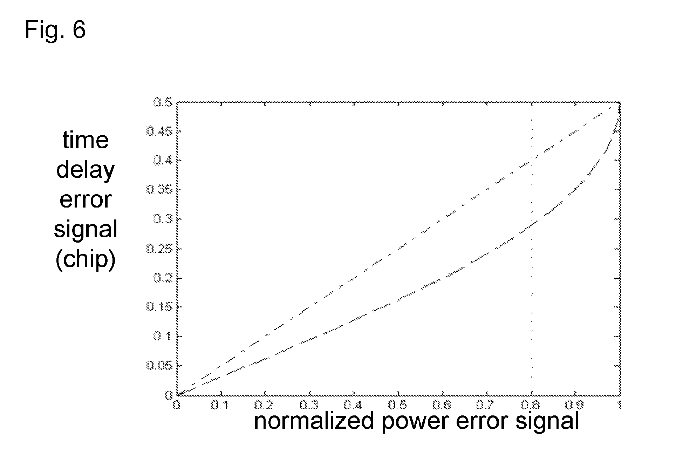

Fig. 6 is a schematic diagram illustrating the comparison of the mapping-relation between the power error signal and the time delay error signal in the present invention and the existing technology, as shown in Fig. 6, it describes only the positive half portion of the graphics in the figure, because the existing technology has larger mapping error, it could be seen from the figure that the time delay error signal determined by the non-linear mapping provided in the present invention is more accurate than that determined according to the existing technology. For example, when $\overline{\eta}_i(\varepsilon)$ is 0.4063, the $\varepsilon$ determined according to the existing technology is 0.4063, however, while the $\varepsilon$ determined according to non-linear mapping of the present invention is 0.2969, the difference between the $\varepsilon$ determined according to the existing technology and the $\varepsilon$ determined according to non-linear mapping of the present invention is 0.1094, and the difference is very big to the system whose tracking accuracy is 1/16, and the error is brought by the unscientific mapping method, and the error could not be corrected through other methods. In the view of that, the non-linear mapping method that is provided by the present invention could raise the accuracy of tracking effectively.

The above are only exemplary embodiments of the present invention, but they are not applied to limit the protection scope of the present invention.

**Claims**

1. A multipath tracking device in code division multiple access communication systems, the device comprising: a late-path pilot symbol power-obtain unit, an early-path pilot symbol power-obtain unit, a middle-path pilot symbol power-obtain unit, an early-late threshold power error-obtain unit, a middle-path power estimation unit, a normalizing-treat unit, a loop filter unit, a non-linear mapping unit, a phase-tracking control unit, a voltage controlled oscillator and a pseudorandom PN code generator, wherein,

said late-path pilot symbol power-obtain unit being applied to generate a late-path signal power according to received late-path signals and PN codes that come from the PN code generator;

said early-path pilot symbol power-obtain unit being applied to generate an early-path signal power according to received early-path signals and PN codes that come from the PN code generator;

said middle-path pilot symbol power-obtain unit being applied to generate a middle-path signal power according to received middle-path signals and PN codes that come from the PN code generator;

said early-late threshold power error-obtain unit being applied to calculate a power error of the late, early-path signal according to said late-path signal power and said early-path signal power;

said middle-path power estimation unit being applied to determine an accurate current middle-path signal power according to said middle-path signal power;

said normalizing-treat unit being applied to normalize said power error according to said accurate current middle-path signal power, and obtaining a normalized power error;

said loop filter unit being applied to filter out the interference of said normalized power error and loop noise, obtain a smooth and stable normalized power error signal;

said non-linear mapping unit being applied to determine a time delay error signal that corresponds to said normalized power error signal according to the corresponding relation between the stored normalized power error signal and the time delay error signal;

said phase-tracking control unit being applied to convert the received time delay error signal to a voltage control signal that corresponds to said voltage controlled oscillator according to the response property of said voltage controlled oscillator;

said voltage controlled oscillator being applied to control the PN code generator to generate PN codes according to said voltage control signal;

said PN code generator generating PN codes under the adjustment of the control voltage of the voltage control oscillator and outputting PN codes respectively to the late-path pilot symbol power-obtain unit, the early-path pilot symbol power-obtain unit and the middle-path pilot symbol power-obtain unit.

2. The device according to claim 1, wherein, said middle-path power estimation unit is further applied to receive said late-path signal power and said early-path signal power, and determine accurate current middle-path signal power according to said late, early, and middle-path signal power.

3. The device according to claim 1 or 2, wherein, said normalizing-treat unit is further applied to make N-point moving weighted average to said middle-path signal power.

4. A multipath tracking method in code division multiple access communication systems, the method comprising:

   determining power errors of late and early-path signals according to PN codes, late and early-path signals, and obtaining an accurate current middle-path signal power;

   normalizing said power error according to said current middle-path signal power, obtaining a normalized power error signal, according to a non-linear mapping relation between the normalized power error signal and a time delay error signal, and determining the time delay error signal that corresponds to the received normalized power error signal;

   converting the time delay error signal to the voltage control signal that used to control PN code-generating, and locking multipath position through adjusting and locking the phase of PN codes.

5. The method according to claim 4, wherein, said obtaining the accurate current middle-path signal power, comprising:

   the current middle-path signal power is treated as accurate current middle-path signal power; or,
   the accurate current middle-path signal power is determined according to the respective power of the late, early, and middle-path signals.

6. The method according to claim 5, wherein, said determining the accurate current middle-path signal power according to the respective power of the late, early, and middle-path signal, comprising:

   $S_i = (P_{i,E}+P_{i,L}+P_{i,O})/(1+2g^2(0.5T_c))$, wherein, $S_i$ is the accurate current middle-path signal power, and $P_{i,E}$ is the early-path signal power, and $P_{i,L}$ is the late-path signal power, and $P_{i,O}$ is the middle-path signal power,

and $1+2g^2(0.5T_c)$ is a set value; or,

$S_i = (P_{i,E}+P_{i,L}+P_{i,O}-Min(P_{i,E},P_{i,L},P_{i,O}))/(1+g^2(0.5T_c))$, wherein, $S_i$ is the accurate current middle-path signal power, and $P_{i,E}$ is the early-path signal power, and $P_{i,L}$ is the late-path signal power, and $P_{i,O}$ is middle-path signal power, and $1+g^2(0.5T_c)$ is a set value.

7. The method according to any of claims 4 to 6, wherein, said non-linear mapping relation between the normalized power error signal and the time delay error signal is: $\overline{\eta}_i(\varepsilon) = g^2((\varepsilon-0.5)T_c)-g^2((\varepsilon+0.5)T_c)$, wherein, $\overline{\eta}_i(\varepsilon)$ is the normalized power error signal, and $\varepsilon$ is the time delay error signal and $-0.5T_c \leq \varepsilon \leq 0.5T_c$, and $\varepsilon$ is the value that is corresponding to $\overline{\eta}_i(\varepsilon)$.

8. The method according to any of claims 4 to 6, wherein, before said normalizing treatment, further comprising: making N-point moving weighted average $\hat{P}_i = \sum_{k=1}^{N} w_k \cdot s_{i-k}$ to the middle-path signal power, wherein, $\hat{P}_i$ is the weighted average power of the middle-path signal, and $s_{i-k}$ is the estimated k th middle-path signal power before the current symbol $S_i$, and $w_k$ is a filter coefficient, and $\sum_{k=1}^{N} w_k = 1$.

9. The method according to claim 8, wherein, said filter coefficient adopts: a weighted average filter; or, a polynomial-weighted filter; or, an index-weighted filter.

Fig. 1

```
                    ┌──────────────┐ ⌒101
late-path signal →  │ late-path pilot │
                    │ symbol power-  │
              ───→  │ obtain unit    │          ┌──────────────┐ ⌒103
                    └──────────────┘            │ early-late   │
                                            ───→│ threshold    │
                    ┌──────────────┐ ⌒102       │ power        │
early-path signal → │ early-path pilot │         │ error-       │
                    │ symbol power-  │───────────→│ obtain unit  │
              ───→  │ obtain unit    │           └──────────────┘
                    └──────────────┘
```

| ⌒107 | ⌒106 | ⌒105 | ⌒104 |
|---|---|---|---|
| PN code generator | ← | Voltage Controlled Oscillator | ← | phase-tracking control unit | ← | loop filter unit | ← |

Fig. 2

normalized power error signal

time delay error signal (chip)

Fig. 3

late-path
signal → **late-path pilot symbol power-obtain unit** (101)

early-path
signal → **early-path pilot symbol power-obtain unit** (102)

middle-path
signal → **middle-path pilot symbol power-obtain unit** (301)

**early-late threshold power error-obtain unit** (302)

**middle-path power estimation unit** (303)

**normalizing-treat unit** (304)

**PN code generator** (107) ← **Voltage Controlled Oscillator** (106) ← **phase-tracking control unit** (105) ← **non-linear mapping unit** (305) ← **loop filter unit** (104)

Fig. 4A

normalized power error signal

time delay error signal (chip)

Fig. 4B

normalized power error signal

time delay error signal (chip)

Fig. 5

EP 2 161 845 A1

Fig. 6

time
delay
error
signal
(chip)

normalized power error signal

## INTERNATIONAL SEARCH REPORT

| International application No. |
| --- |
| PCT/CN2007/070316 |

**A. CLASSIFICATION OF SUBJECT MATTER**

### H04B1 / 707 (2006. 01) i

According to International Patent Classification (IPC) or to both national classification and IPC

**B. FIELDS SEARCHED**

Minimum documentation searched (classification system followed by classification symbols)

### IPC: H04B1/707; H04B7/02; H04J13/02

Documentation searched other than minimum documentation to the extent that such documents are included in the fields searched

Electronic data base consulted during the international search (name of data base and, where practicable, search terms used)

WPI、EPODOC、PAJ、CPRS、CNKI : CDMA MULTIPATH TRACK POWER ERROR NORMALIZATION NONLINEAR MAP MIDDLE PUNCTUAL

**C. DOCUMENTS CONSIDERED TO BE RELEVANT**

| Category* | Citation of document, with indication, where appropriate, of the relevant passages | Relevant to claim No. |
| --- | --- | --- |
| A | CN1322073A (ZHONGXING COMMUNICATION CO LTD SHENZHEN ) 14 Nov. 2001 (14.11.2001) see description page 5, line 1 to page 8, line 17, Fig. 2 | 1-9 |
| A | CN1561582A (INTERDIGITAL TECHNOLOGY CORP) 05 Jan. 2005 (05.01.2005) see whole document | 1-9 |
| A | CN1503492A (HUAWEI TECH CO LTD) 09 Jun. 2004 (09.06.2004) see whole document | 1-9 |
| A | US6690713B1 (LUCENT TECHNOLOGIES INC) 10 Feb. 2004 (10.02.2004) see whole document | 1-9 |

☐ Further documents are listed in the continuation of Box C. ☒ See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim (S) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&"document member of the same patent family

| Date of the actual completion of the international search | Date of mailing of the international search report |
| --- | --- |
| 21 Jan. 2008 (21.01.2008) | **14 Feb. 2008 (14.02.2008)** |

| Name and mailing address of the ISA/CN | Authorized officer |
| --- | --- |
| The State Intellectual Property Office, the P.R.China 6 Xitucheng Rd., Jimen Bridge, Haidian District, Beijing, China 100088 Facsimile No. 86-10-62019451 | **ZHANG,Xin** Telephone No. (86-10)62411404 |

Form PCT/ISA/210 (second sheet) (April 2007)

**INTERNATIONAL SEARCH REPORT**
Information on patent family members

International application No.

PCT/CN2007/070316

| Patent Documents referred in the Report | Publication Date | Patent Family | Publication Date |
|---|---|---|---|
| CN1322073A | 14.11.2001 | CN1148025C | 28.04.2004 |
| CN1561582A | 05.01.2005 | US6456648B1 | 24.09.2002 |
| | | EP1433266A1 | 30.06.2004 |
| | | AU2002303322A1 | 14.04.2003 |
| | | NO20041632A | 21.04.2004 |
| | | JP2005505190T | 17.02.2005 |
| | | MXPA04003019 A | 01.07.2004 |
| | | EP1433266B1 | 30.11.2005 |
| | | TW200419955A | 01.10.2004 |
| | | DE60207747E | 05.01.2006 |
| | | EP1638216 A2 | 22.03.2006 |
| | | ES2250650T3 | 16.04.2006 |
| | | DE60207747T2 | 27.07.2006 |
| | | TW247549B1 | 11.01.2006 |
| | | JP2007189720A | 26.07.2007 |
| | | US2003063657A1 | 03.04.2003 |
| | | US6633603B2 | 14.10.2003 |
| | | CA2462504A | 10.04.2003 |
| | | WO03030389A1 | 10.04.2003 |
| | | US2004057506A1 | 25.03.2004 |
| | | US7010020B2 | 07.03.2006 |
| | | AT311698T | 15.12.2005 |
| | | DK1433266T | 03.04.2006 |
| | | US2006126574A1 | 15.06.2006 |
| | | TW279094B | 11.04.2007 |
| CN1503492A | 09.06.2004 | CN1235363C | 04.01.2006 |
| US6690713B1 | 10.02.2004 | NONE | |

Form PCT/ISA/210 (patent family annex) (April 2007)